# EUROPEAN PATENT APPLICATION

(11) **EP 1 930 882 A1**
(43) Date of publication of application: **11.06.2008**
(21) Application number: 07252789.8
(22) Date of filing: 12.07.2007
(51) Int. Cl.: G11B 5/66, G11B 5/64

(54) **Perpendicular magnetic recording medium with multilayer recording structure including intergranular exchange enhancement layer**

(30) Priority: 07.12.2006 US 567908
(71) Applicant: Hitachi Global Storage Technologies Netherlands B.V., 1076 AZ Amsterdam (NL)
(72) Inventor: Berger, Andreas Klaus, San Jose, CA 95138 (US); Dai, Qing, San Jose, CA 95125 (US); Do, Hoa Van, Fremont, CA 94555 (US); Ikeda, Yoshihiro, San Jose, CA 95120 (US); Margulies, David Thomas, Salinas, CA 93907 (US); Supper, Natacha F., Campbell, CA 95008 (US); Takano, Kentaro, San Jose, CA 95120 (US); Xiao, Min, Pittsburgh, PA 15238 (US)
(74) Representative: Calderbank, Thomas Roger

(57) **Abstract**

A perpendicular magnetic recording medium has B multilayer recording layer (RL) structure that includes a ferromagnetic intergranular exchange enhancement layer for mediating intergranular exchange coupling in the other ferromagnetic layers in the RL structure. The RL structure may be a multilayer of a first ferromagnetic layer (MAG1) of granular polycrystalline Co alloy with Ta-oxide, a second ferromagnetic layer (MAG2) of granular polycrystalline Co alloy with Si-oxide, and an oxide-free CoCr capping layer on top of and in contact with MAG2 for mediating intergranular exchange coupling in MAG1 and MAG2. The RL structure may also be a multilayer of an intergranular exchange enhancement interlayer (IL) in between two ferromagnetic layers, MAG1 and MAG2, each with reduced or no intergranular exchange coupling. Because the IL is in direct contact with both MAG1 and MAG2, it directly mediates intergranular exchange coupling in each of MAG1 and MAG2.

## Description

This invention relates generally to perpendicular magnetic recording media, such as perpendicular magnetic recording disks for use in magnetic recording hard disk drives, and more particularly to a perpendicular magnetic recording medium with a multilayer recording layer having optimal intergranular exchange coupling.

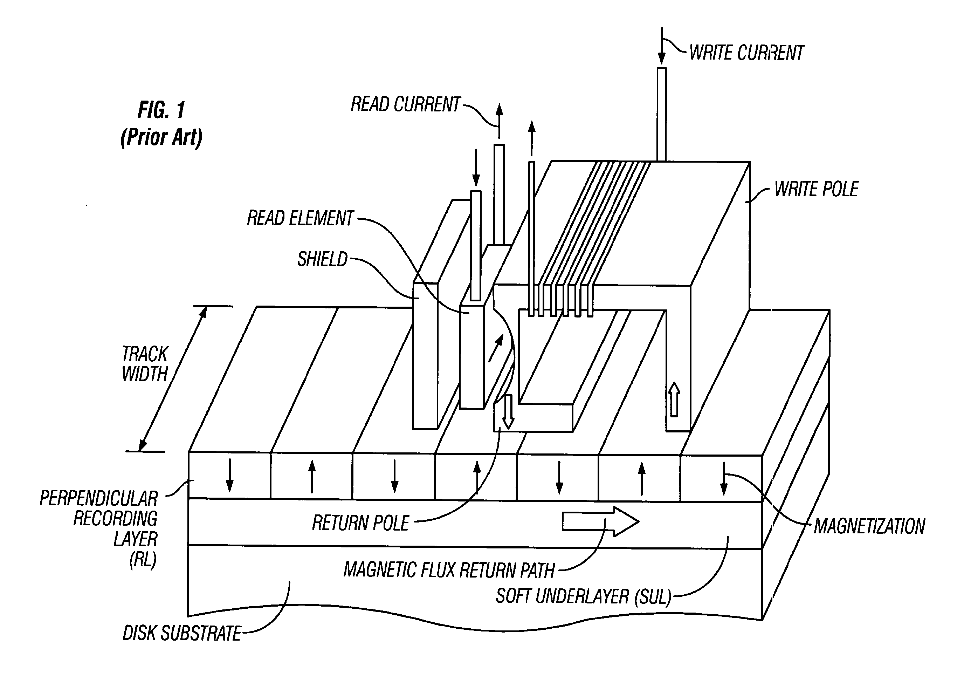

Horizontal or longitudinal magnetic recording media, wherein the written or recorded bits are oriented generally parallel to the surfaces of the disk substrate and the planar recording layer, has been the conventional media used in magnetic recording hard disk drives. Perpendicular magnetic recording media, wherein the recorded bits are stored in the recording layer in a generally perpendicular or out-of-plane orientation (i.e., other than parallel to the surfaces of the disk substrate and the recording layer), provides a promising path toward ultra-high recording densities in magnetic recording hard disk drives. A common type of perpendicular magnetic recording system is one that uses a "dual-layer" medium. This type of system is shown in Fig. 1 with a single write pole type of recording head. The dual-layer medium includes a perpendicular magnetic data recording layer (RL) on a "soft" or relatively low-coercivity magnetically permeable underlayer (SUL) formed on the substrate.

The SUL serves as a flux return path for the field from the write pole to the return pole of the recording head. In Fig. 1, the RL is illustrated with perpendicularly recorded or magnetized regions, with adjacent regions having opposite magnetization directions, as represented by the arrows. The magnetic transitions between adjacent oppositely-directed magnetized regions are detectable by the read element or head as the recorded bits. The read head is typically located between shields of magnetically permeable material to ensure that recorded bits other than the bit being read do not affect the read head.

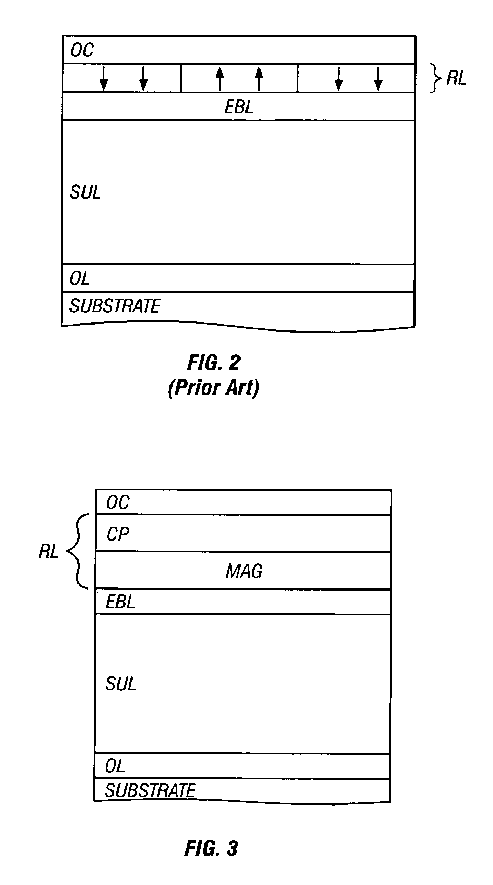

Fig. 2 is a schematic of a cross-section of a prior art perpendicular magnetic recording disk. The disk also includes the hard disk substrate that provides a generally planar surface for the subsequently deposited layers. The generally planar layers formed on the surface of the substrate also include a seed or onset layer (OL) for growth of the SUL, an exchange break layer (EBL) to break the magnetic exchange coupling between the magnetically permeable films of the SUL and the RL and to facilitate epitaxial growth of the RL, and a protective overcoat (OC).

One type of conventional material for the RL is a granular polycrystalline ferromagnetic cobalt (Co) alloy, such as a CoPtCr alloy. The ferromagnetic grains of this material have a hexagonal-close-packed (hcp) crystalline structure and out-of-plane or perpendicular magnetic anisotropy as a result of the c-axis of the hcp crystalline structure being induced to grow perpendicular to the plane of the layer during deposition. To induce this epitaxial growth of the hcp RL, the EBL onto which the RL is formed is also typically an hcp material.

Both horizontal and perpendicular magnetic recording media that use recording layers of granular polycrystalline ferromagnetic Co alloys exhibit increasing intrinsic media noise with increasing linear recording density. Media noise arises from irregularities in the recorded magnetic transitions and results in random shifts of the readback signal peaks. High media noise leads to a high bit error rate (BER). Thus to obtain higher areal recording densities it is necessary to decrease the intrinsic media noise, i.e., increase the signal-to-noise ratio (SNR), of the recording media. The granular cobalt alloys in the RL structure should thus have a well-isolated fine-grain structure to reduce intergranular exchange coupling, which is responsible for high intrinsic media noise. Enhancement of grain segregation in the cobalt alloy RL can be achieved by the addition of segregants, such as oxides of Si, Ta, Ti, Nb, Cr, V, and B. These segregants tend to precipitate to the grain boundaries, and together with the elements of the cobalt alloy, form nonmagnetic intergranular material. The addition of SiO₂ to a CoPtCr granular alloy by sputter deposition from a CoPtCr-SiO₂ composite target is described by H. Uwazumi, et al., "CoPtCr-SiO2 Granular Media for High-Density Perpendicular Recording", IEEE Transactions on Magnetics, Vol. 39, No. 4, July 2003, pp. 1914-1918. The addition of Ta₂O₅ to a CoPt granular alloy is described by T. Chiba et al., "Structure and magnetic properties of Co-Pt-Ta2O5 film for perpendicular magnetic recording media", Journal of Magnetism and Magnetic Materials, Vol. 287 , February 2005, pp. 167-171.

Perpendicular magnetic recording media with RLs containing oxides or other segregants for improved SNR are subject to thermal decay. As the magnetic grains become smaller to achieve ultrahigh recording density they become more susceptible to magnetic decay, i.e., magnetized regions spontaneously lose their magnetization, resulting in loss of data. This is attributed to thermal activation of small magnetic grains (the superparamagnetic effect). The thermal stability of a magnetic grain is to a large extent determined by KᵤV, where Kᵤ is the magnetic anisotropy constant of the magnetic recording layer and V is the volume of the magnetic grain. Thus a RL with a high Kᵤ is important for thermal stability, although the Kᵤ can not be so high as to prevent writing on the RL.

In horizontal recording media, the complete absence of intergranular exchange coupling provides the best SNR. However, in perpendicular recording media the best SNR is achieved at some intermediate level of intergranular exchange coupling in the RL. Also, intergranular exchange coupling improves the thermal stability of the magnetization states in the media grains. Thus in perpendicular recording media, some level of intergranular exchange coupling is advantageous. One approach for increasing the intergranular exchange coupling is by adding a continuous intergranular exchange enhancement layer, also called a "capping" layer, on top of the underlying oxide-containing granular Co alloy, as described for example in Choe et al., "Perpendicular Recording CoPtCrO Composite Media With Performance Enhancement Capping Layer", IEEE TRANSACTIONS ON MAGNETICS, VOL. 41, NO. 10, OCTOBER 2005, pp. 3172-3174. The capping layer is typically a CoCr alloy with no oxides or other segregants.

There are several problems with RL structures that have a single lower ferromagnetic layer with reduced or no intergranular exchange coupling, such as oxide-containing granular Co alloy layers, covered by an upper continuous oxide-free capping layer for enhancing intergranular exchange coupling. When the lower ferromagnetic layer is a Ta-oxide-containing layer the RL structure has unacceptable corrosion resistance. When the lower ferromagnetic layer is a Si-oxide-containing layer the RL structure has less than optimal recording performance. In all such RL structures, because the intergranular exchange coupling occurs only through the interaction between the upper capping layer and the top surface of the underlying oxide-containing layer, the capping layer must be made relatively thick to create the optimal amount of intergranular exchange coupling. This large thickness for the RL structure can adversely affect resolution and writability because it produces an increase in the transition width (or 'a' parameter) causing adjacent transitions to increasingly interfere when readback at high recording density.

What is needed is a perpendicular magnetic recording medium with an RL structure that has good corrosion resistance, optimal recording performance, and optimal intergranular exchange coupling to produce high SNR and high thermal stability, but without the required large thickness that results from a capping layer.

The invention is a perpendicular magnetic recording medium with a multilayer RL structure that includes a ferromagnetic intergranular exchange enhancement layer for mediating intergranular exchange coupling in the other ferromagnetic layers in the RL structure. In a first embodiment the RL structure is a multilayer of two lower ferromagnetic layers (MAG1 and MAG2), each with reduced or no intergranular exchange coupling, and a ferromagnetic capping layer as the intergranular exchange enhancement layer on top of and in contact with the upper ferromagnetic layer MAG2. MAG1 may be a granular polycrystalline Co alloy and an oxide or oxides of Ta, MAG2 may be a granular polycrystalline Co alloy and an oxide of Si, and the capping layer may be an oxide-free CoCr alloy. The lower Ta-oxide-containing MAG1, which has good recording properties but poor corrosion resistance, is located farther from the disk surface so as to be less susceptible to corrosion, and the Si-oxide-containing MAG2, which has poor recording properties but good corrosion resistance, is in contact with the capping layer.

In a second embodiment, the RL structure is a multilayer with an intergranular exchange enhancement interlayer (IL) in between two ferromagnetic layers, MAG1 and MAG2, each with reduced or no intergranular exchange coupling. The intergranular exchange enhancement from the IL acts on two interfaces. Because the total thickness of MAG1+MAG2 is substantially the same as the thickness of a comparable single magnetic layer with a capping layer on top, the IL is acting on half the thickness of the comparable single magnetic layer and can thus be made thinner than the capping layer. In this second embodiment, the IL may be an oxide-free CoCr alloy like the capping layer in the first embodiment, and MAG1 and MAG2 may be a granular polycrystalline Co alloys, such as a CoPt or CoPtCr alloy, with a suitable segregant such as an oxide or oxides of one or more of Si, Ta, Ti, Nb, Cr, V and B. Also, like in the first embodiment, MAG1 may be a Co alloy with Ta-oxide and MAG2 may be a Co alloy with Si-oxide. However, MAG1 and MAG2 may also have the identical composition and thickness. Also, instead of a granular polycrystalline Co alloy, one or both of MAG1 and MAG2 may be formed of any of the known amorphous or crystalline materials and structures that exhibit perpendicular magnetic anisotropy.

The invention is also a perpendicular magnetic recording system that includes the above-described medium and a magnetic recording write head.

For a fuller understanding of the nature and advantages of the present invention, reference should be made to the following detailed description taken together with the accompanying figures.

### IN THE DRAWINGS

Fig. 1 is a schematic of a prior art perpendicular magnetic recording system.

Fig. 2 is a schematic of a cross-section of a prior art perpendicular magnetic recording disk.

Fig. 3 is a schematic of a cross-section of a prior art perpendicular magnetic recording disk according to the prior art with a capping layer CP at the top of the RL structure.

Fig. 4A illustrates schematically the grains and magnetizations in a RL without a capping layer according to the

### prior art.

Fig. 4B illustrates schematically the grains and magnetizations in a RL with a capping layer according to the

### prior art.

Fig. 5 is a schematic of a cross-section of a first embodiment of the perpendicular magnetic recording disk of this invention showing a multilayer RL structure of two lower ferromagnetic layers (MAG1 and MAG2), each with reduced or no intergranular exchange coupling, and a capping layer (CP) on top of and in contact with the upper ferromagnetic layer MAG2.

Fig. 6 is a schematic of a cross-section of a second embodiment of the perpendicular magnetic recording disk of this invention showing a multilayer RL structure of an intergranular exchange enhancement layer (IL) in the middle of the RL structure between two magnetic layers MAG1 and MAG2.

Fig. 7 illustrates schematically the grains and magnetizations in MAG1 and MAG2 with the intergranular enhancement layer IL between them for the embodiment of Fig. 6.

Fig. 8 shows the coercivity H_{c} of the prior art RL structure as a function of the CP thickness as compared to the multilayer RL structure of the second embodiment of this invention as a function of IL thickness.

Fig. 9 shows the nucleation field coercivity Hₙ of the prior art RL structure as a function of the CP thickness as compared to the multilayer RL structure of the second embodiment of this invention as a function of IL thickness.

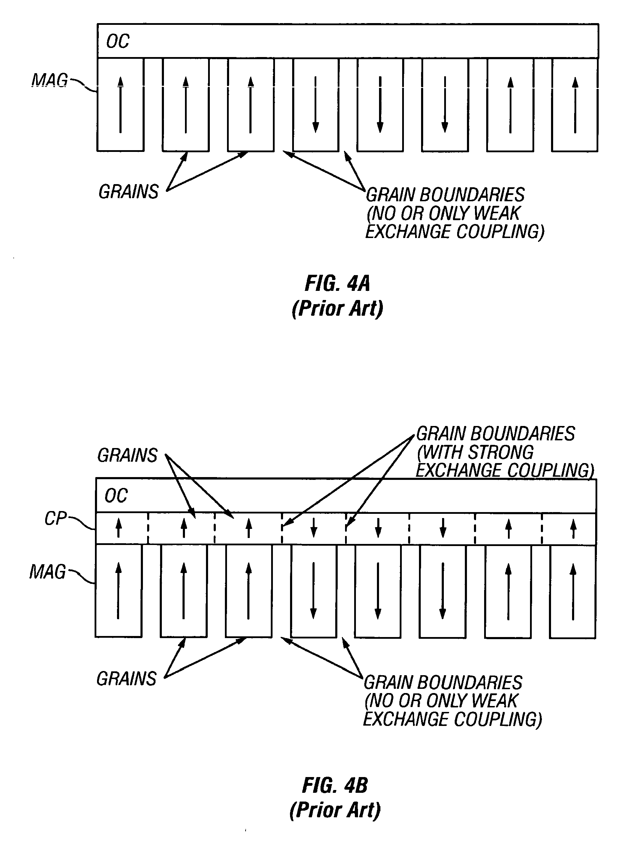

The prior art perpendicular magnetic recording medium wherein the RL includes a capping layer (CP) on top of a single ferromagnetic layer (MAG) is depicted in schematic cross-section in Fig. 3. The MAG is typically a granular Co cobalt alloy, such as a CoPt or CoPtCr alloy, with a suitable segregant such as an oxide or oxides of one or more of Si, Ta, Ti, Nb, Cr, V and B. The CP is deposited directly on top of and in contact with the MAG. The ferromagnetic alloy in the CP has significantly greater intergranular exchange coupling than the ferromagnetic alloy in the MAG. The material of the CP may be a Co alloy, such as a CoCrPtB alloy, that typically does not include any significant amount of oxide or other segregant, which would tend to reduce intergranular exchange coupling in the CP. Because the CP grain boundaries overlay the boundaries of the generally segregated and decoupled grains of the MAG with which it is in contact, and the CP and MAG grains are strongly coupled perpendicularly, the CP introduces an effective intergranular exchange coupling in the MAG. This is depicted in Figs. 4A-4B, which illustrate schematically the grains and magnetizations in MAG without the CP (Fig. 4A) and with the CP (Fig. 4B).

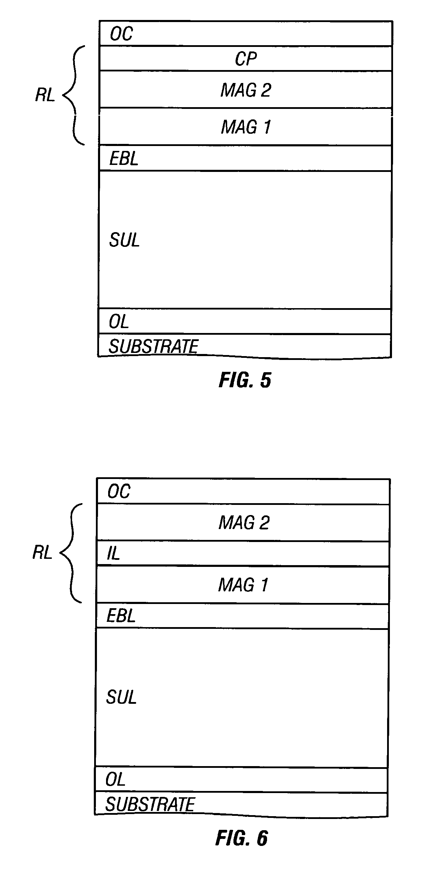

A first embodiment of the perpendicular magnetic recording disk of this invention is illustrated in Fig. 5, which is schematic of a cross-section of the disk. The RL structure is a multilayer of two lower ferromagnetic layers (MAG1 and MAG2), each with reduced or no intergranular exchange coupling, and a CP on top of and in contact with the upper ferromagnetic layer MAG2.

MAG1 is formed of a granular polycrystalline Co alloy, such as a CoPt or CoPtCr alloy, and an oxide or oxides of Ta. MAG2 is formed of a granular polycrystalline Co alloy, such as a CoPt or CoPtCr alloy, and an oxide or oxides of Si. The CP may be formed of Co, or ferromagnetic Co alloys, such as CoCr alloys. The Co alloys of the CP may include one or both of Pt and B. The CP is deposited directly on MAG2, with MAG2 being deposited directly on MAG1. MAG1 and MAG2 are sputter deposited at relatively high pressure (e.g., 10-20 mTorr) in the presence of oxygen. Alternatively MAG1 and MAG2 may be sputter deposited from an oxide-containing target (e.g., a Ta₂O₅ target in the case of MAG1 and a SᵢO₂ target in the case of MAG2) either with or without the presence of oxygen in the sputtering chamber. The CP is typically sputter deposited at lower pressure (e.g., 2-5 mTorr) without the presence of oxygen. The ferromagnetic alloy in the CP has significantly greater intergranular exchange coupling than the ferromagnetic alloys in MAG1 and MAG2. The CP alloy should preferably not include any oxides or other segregants, which would tend to reduce intergranular exchange coupling in the CP.

The embodiment of Fig. 5 is based on the discovery that a single Ta-oxide-containing ferromagnetic layer covered with a CP has unacceptable corrosion resistance. In a conventional electro-chemical corrosion current test, a Ta-oxide-containing ferromagnetic layer exhibited susceptibility to corrosion approximately 10 times that of an identical ferromagnetic layer, but wherein the Ta-oxide was replaced by Si-oxide. It has also been discovered that a RL structure of a single Ta-oxide-containing ferromagnetic layer covered with a CP exhibits better recording, specifically in terms of signal-to-noise ratio (SNR) and overwrite (OW), than a comparable RL structure of a single Si-oxide-containing ferromagnetic layer covered with a CP. Thus, in the embodiment of Fig. 5, MAG1 which is a Ta-oxide-containing ferromagnetic layer with good recording properties but poor corrosion resistance, is located farther from the disk surface so as to be less susceptible to corrosion, and MAG2, which is a Si-oxide-containing ferromagnetic layer with poor recording properties but good corrosion resistance, is in contact with the CP. In one specific implementation of the first embodiment of this invention, MAG1 is a 5 nm thick layer of Co₆₅Cr₁₉Pt₁₉ (Ta₂O₅)₂, MAG2 is a 8 nm thick layer of Co₅₇Cri₇Ptig(SiO₂)₈, and CP is a 7 nm thick layer of CO₆₃Cr₁₄Pt₁₂B₁₁.

Referring again to the prior art of Fig. 3, a relatively large thickness of the CP is required to create the optimal amount of intergranular exchange coupling. This CP thickness can be about 8 nm, as compared to a thickness range for the MAG of about 10 to 15 nm. The relatively thick CP adversely effects resolution and writability because it produces an increase in the transition width (or 'a' parameter) causing adjacent transitions to increasingly interfere when readback at high recording density. One reason that a large CP thickness is required is that the intergranular exchange coupling occurs only through the interaction at the interface between the CP and the top surface of the MAG, as depicted in Fig. 4B.

In a second embodiment of the perpendicular magnetic recording medium of this invention, as depicted in Fig. 6, the RL structure is a multilayer with an intergranular exchange enhancement interlayer (IL) in between two ferromagnetic layers, MAG1 and MAG2. The total thickness of MAG1 + MAG2 is the same as the thickness of MAG in the prior art of Fig. 3. The IL functions like the CP. However, the intergranular exchange from the IL acts on two interfaces instead of one. Also, because the IL is acting on half the thickness of magnetic layer than in the prior art of Fig. 3, it can be made thinner. Therefore, the same or better effects as achieved with the prior art can be achieved with less total thickness for the RL structure.

In the embodiment of Fig. 6, the MAG1 and MAG2 layers are preferably formed of a granular polycrystalline Co alloy, such as a CoPt or CoPtCr alloy, with a suitable segregant such as an oxide or oxides of one or more of Si, Ta, Ti, Nb, Cr, V and B. Also, like in the embodiment of Fig 5, MAG1 may be a CoPtCr-Ta-oxide material and MAG2 a CoPtCr-Si-oxide material. However, unlike the embodiment of Fig. 5, MAG1 and MAG2 may have the identical composition,and thickness. Also, instead of a granular polycrystalline Co alloy, one or both of MAG1 and MAG2 may be formed of any of the known amorphous or crystalline materials and structures that exhibit perpendicular magnetic anisotropy. Thus, MAG1 and/or MAG2 may be composed of multilayers with perpendicular magnetic anisotropy, such as Co/Pt, Co/Pd, Fe/Pt and Fe/Pd multilayers, containing a suitable segregant such as the materials mentioned above. In addition, perpendicular magnetic layers containing rare earth elements are useable for MAG1 and/or MAG2, such as CoSm, TbFe, TbFeCo, GdFe alloys.

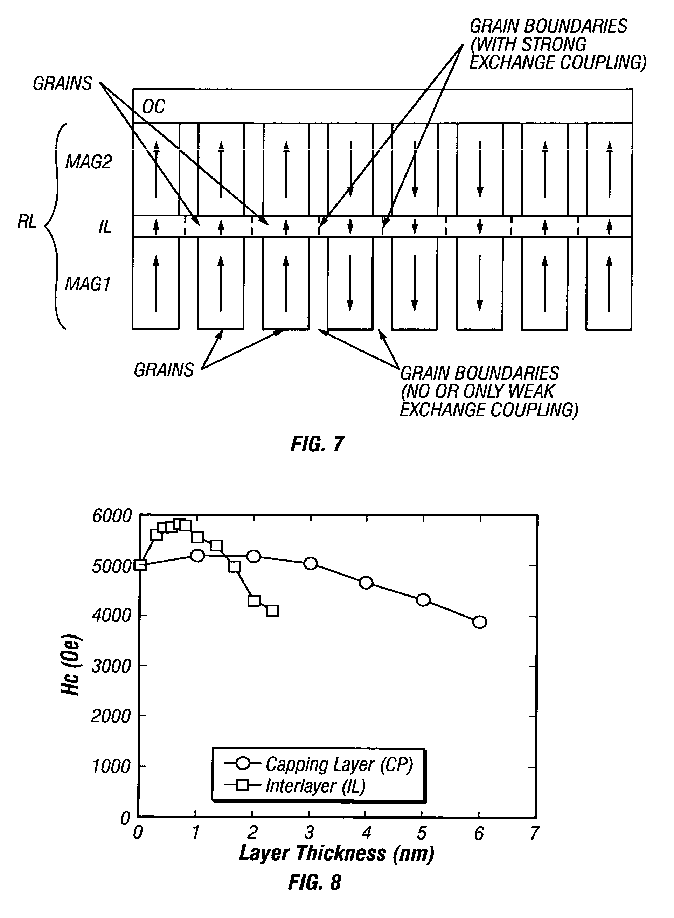

The IL may be formed of Co, or ferromagnetic Co alloys, such as CoCr alloys. The Co alloys may include one or both of Pt and B. The IL is deposited directly on MAG1 and MAG2 is deposited directly on the IL. MAG1 and MAG2, if they are oxide-containing Co alloys, are sputter deposited at relatively high pressure (e.g., 10-20 mTorr) in the presence of oxygen. Alternatively they may be sputter deposited from an oxide-containing target but not in the presence of oxygen. The IL is typically sputter deposited at lower pressure (e.g., 2-5 mTorr) without the presence of oxygen. The ferromagnetic alloy in the IL has significantly greater intergranular exchange coupling than the ferromagnetic alloys in MAG1 and MAG2. The IL alloy should preferably not include any oxides or other segregants, which would tend to reduce intergranular exchange coupling in the IL. Because the IL grain boundaries overlay the boundaries of the generally segregated and decoupled grains of MAG1 and MAG2 at the two interfaces, and the IL and MAG1 grains at one interface and the IL and MAG2 grains at the other interface are strongly coupled perpendicularly, the IL introduces an effective intergranular exchange coupling in MAG1 and MAG2. This results in a combined MAG1+IL+MAG2 system with a tunable level of intergranular exchange. This is depicted in Fig. 7, which illustrates schematically the grains and magnetizations in MAG1 and MAG2 with the IL. As depicted in Fig. 7, the IL in the RL structure of this invention can be approximately one-half the thickness of the CP in the RL structure of the prior art (Fig. 3).

The total MAG1+IL+MAG2 thickness should be in the range of approximately10 to 20 nm, preferably in the range of approximately 13 to 17 nm. The IL portion of the total MAG1+IL+MAG2 thickness should be between about 3 to 25%, with a preferred range of about 6 to 15%. The optimal IL thickness can be determined experimentally by varying the thickness and measuring the performance of the disks to determine which thickness provides the most suitable level of intergranular exchange coupling for the combined MAG1+IL+MAG2 system.

To achieve high performance perpendicular magnetic recording disks at ultra-high recording densities, e.g., greater than about 200 Gbits/in², the RL should exhibit low intrinsic media noise (high signal-to-noise ratio or SNR), a coercivity He greater than about 4000 Oe and a nucleation field Hₙ greater (more negative) than about -1500 Oe. The nucleation field Hₙ is the reversing field, preferably in the second quadrant of the M-H hysteresis loop, at which the magnetization begins to drop from its saturation value (Mₛ). The more negative the nucleation field, the more stable the remanent magnetic state will be because a larger reversing field is required to alter the magnetization.

To test the improvements in recording performance with the second embodiment of this invention, various disk structures were fabricated and H_{c} and Hₙ measured as a function of CP thickness (for the prior art structure like that shown in Fig. 3) and IL thickness (for the structure according to this invention like that shown in Fig. 6). MAG1 was a 5 nm thick CO₆₅Cr₁₉Pt₁₄(Ta₂O₅)₂ layer and MAG2 was a 8 nm thick CO₅₇Cr₁₇Pt₁₈(SiO₂)₈ layer. For comparison the prior art MAG in Fig. 3 was represented by a bilayer of MAG2 in direct contact with MAG1. The IL and CP layers were CO₆₃Cr₁₄Pt₁₂B₁₁.

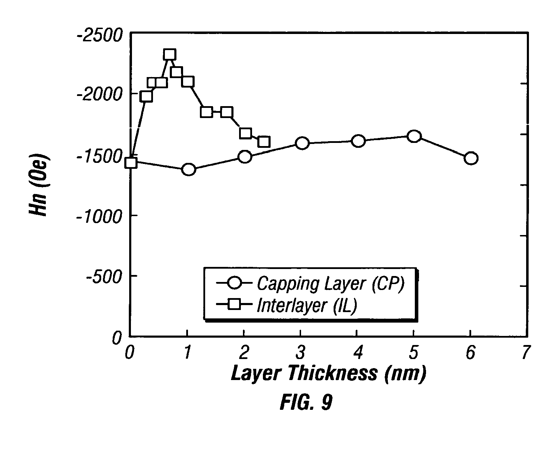

Figs. 8 and 9 show the coercivity H_{c} and nucleation field Hₙ, respectively, of these two RL structures as a function of the CP thickness when it is on top of MAG as in the prior art, and the IL thickness when it is between MAG1 and MAG2 as in this invention. When the CP is on top, the coercivity slightly increases and then steadily decreases as the intergranular exchange coupling becomes stronger with CP thickness. The intergranular exchange coupling manifests itself in the increased nucleation field as shown in Fig. 9. When the intergranular exchange enhancement layer is on top, Hₙ increases (becomes more negative) as CP thickness increases, then remains high even though H_{c} drops. This behavior is a signature of added intergranular exchange coupling and is why the CP layer is added in the prior art to improve the performance. To contrast this, when the intergranular exchange enhancement layer (IL) is in the center between MAG1 and MAG2, the H_{c} at first increases dramatically for small thicknesses of IL, as shown in Fig. 8. This behavior demonstrates that this RL structure grows well. It is surprising that the MAG2 layer, which contains an oxide and is grown at high pressure, is able to grow with high coercivity on the IL, which does not contain an oxide and is grown at low pressure. More importantly, as shown in Fig. 9, with the IL the Hₙ increases dramatically with increasing IL thickness for small thicknesses and much more rapidly than with the CP layer of the prior art. This increase occurs at much smaller thicknesses for the IL than for the CP layer. Thus, Figs. 8-9 demonstrate that adding the intergranular exchange enhancement layer in the center of the RL structure is a more effective way to increase the intergranular exchange coupling than adding it as a capping layer on top of the RL structure.

A representative disk structure for the invention shown in Figs. 5 and 6 will now be described. The hard disk substrate may be any commercially available glass substrate, but may also be a conventional aluminum alloy with a NiP surface coating, or an alternative substrate, such as silicon, canasite or silicon-carbide.

The adhesion layer or OL for the growth of the SUL may be an AlTi alloy or a similar material with a thickness of about 2-5 nm. The SUL may be formed of magnetically permeable materials such as alloys of CoNiFe, FeCoB, CoCuFe, NiFe, FeAlSi, FeTaN, FeN, FeTaC, CoTaZr, CoFeTaZr, CoFeB, and CoZrNb. The SUL may also be a laminated or multilayered SUL formed of multiple soft magnetic films separated by nonmagnetic films, such as electrically conductive films of A1 or CoCr. The SUL may also be a laminated or multilayered SUL formed of multiple soft magnetic films separated by interlayer films that mediate an antiferromagnetic coupling, such as Ru, Ir, or Cr or alloys thereof.

The EBL is located on top of the SUL. It acts to break the magnetic exchange coupling between the magnetically permeable films of the SUL and the RL and also serves to facilitate epitaxial growth of the RL. The EBL may not be necessary, but if used it can be a nonmagnetic titanium (Ti) layer; a non-electrically-conducting material such as Si, Ge and SiGe alloys; a metal such as Cr, Ru, W, Zr, Nb, Mo, V and Al; a metal alloy such as amorphous CrTi and NiP; an amorphous carbon such as CNₓ, CHₓ and C; or oxides, nitrides or carbides of an element selected from the group consisting of Si, Al, Zr, Ti, and B. If an EBL is used, a seed layer may be used on top of the SUL before deposition of the EBL. For example, if Ru is used as the EBL, a 1-8 nm thick NiFe or NiW seed layer may be deposited on top of the SUL, followed by a 3-30 nm thick Ru EBL. The EBL may also be a multilayered EBL.

The OC formed on top of the RL may be an amorphous "diamond-like" carbon film or other known protective overcoats, such as Si-nitride.

While the present invention has been particularly shown and described with reference to the preferred embodiments, it will be understood by those skilled in the art that various changes in form and detail may be made without departing from the spirit and scope of the invention. Accordingly, the disclosed invention is to be considered merely as illustrative and limited in scope only as specified in the appended claims, as interpreted by the description and drawings.

## Claims

1. A perpendicular magnetic recording medium comprising:
a substrate;
a first ferromagnetic layer on the substrate and having an out-of-plane easy axis of magnetization, the first ferromagnetic layer comprising a segregant for reducing intergranular exchange coupling;
a second ferromagnetic layer on the first ferromagnetic layer and having an out-of-plane easy axis of magnetization, the second ferromagnetic layer comprising a segregant for reducing intergranular exchange coupling; and
a ferromagnetic intergranular exchange enhancement layer in contact with at least one of said first and second ferromagnetic layers.

2. The medium of claim 1 wherein the second ferromagnetic layer is directly on and in contact with the first ferromagnetic layer, wherein the first and second ferromagnetic layers have substantially different compositions, and wherein the intergranular exchange enhancement layer is a capping layer directly on and in contact with the second ferromagnetic layer.

3. The medium of claim 2 wherein the first ferromagnetic layer comprises a granular polycrystalline cobalt alloy and an oxide of Ta, and the second ferromagnetic layer comprises a granular polycrystalline cobalt alloy and an oxide of Si.

4. The medium of claim 3 wherein the capping layer is a substantially oxide-free layer comprising a ferromagnetic Co alloy comprising Cr and an element selected from the group consisting of B and Pt.

5. The medium of claim 1 wherein the intergranular exchange enhancement layer is an interlayer (IL) directly on and in contact with the first ferromagnetic layer, and the second ferromagnetic layer is directly on and in contact IL.

6. The medium of claim 5 wherein the IL is selected from the group consisting of Co and a ferromagnetic Co alloy.

7. The medium of claim 6 wherein the IL is a ferromagnetic alloy consisting essentially of only Co and Cr.

8. The medium of claim 6 wherein the IL is a substantially oxide-free ferromagnetic Co alloy.

9. The medium of claim 5 wherein each of the first and second ferromagnetic layers comprises a granular polycrystalline cobalt alloy and an oxide of one or more of Si, Ta, Ti, Nb, Cr, V and B.

10. The medium of claim 5 wherein the first and second ferromagnetic layers have substantially the same composition.

11. The medium of claim 5 wherein the first ferromagnetic layer comprises a CoPtCr alloy and an oxide of Ta, and the second ferromagnetic layer comprises a CoPtCr alloy and an oxide of Si.

12. The medium of claim 5 wherein the first and second ferromagnetic layers have substantially the same thickness.

13. The medium of claim 5 wherein each of the first and second ferromagnetic layers is a multilayer selected from the group consisting of Co/Pt, Co/Pd, Fe/Pt and Fe/Pd multilayers.

14. The medium of 1 further comprising an underlayer of magnetically permeable material on the substrate and an exchange break layer between the underlayer and the first ferromagnetic layer for preventing magnetic exchange coupling between the underlayer and the first ferromagnetic layer.

15. A perpendicular magnetic recording disk comprising:
a substrate having a generally planar surface;
an underlayer of magnetically permeable material on the substrate surface;
a first ferromagnetic layer on the underlayer, the first ferromagnetic layer having an out-of-plane easy axis of magnetization and comprising a granular polycrystalline cobalt alloy and an oxide of one or more of Si, Ta, Ti, Nb, Cr, V and B;
a ferromagnetic interlayer (IL) in contact with the first ferromagnetic layer, the IL comprising an oxide-free ferromagnetic alloy comprising Co and Cr; and
a second ferromagnetic layer in contact with the IL, the second ferromagnetic layer having an out-of-plane easy axis of magnetization and comprising a granular polycrystalline cobalt alloy and an oxide of one or more of Si, Ta, Ti, Nb, Cr, V and B.

16. The disk of claim 15 wherein the IL alloy includes an element selected from the group consisting of B and Pt.

17. The disk of claim 15 further comprising an exchange break layer between the underlayer and the first ferromagnetic layer for preventing magnetic exchange coupling between the underlayer and the first ferromagnetic layer.

18. A perpendicular magnetic recording system comprising:
the disk of claim 15;
a write head for magnetizing regions in the recording layer of said disk, said recording layer comprising the first ferromagnetic layer, the IL, and the second ferromagnetic layer; and
a read head for detecting the transitions between said magnetized regions.
